# EUROPÄISCHE PATENTSCHRIFT

(11) **EP 2 225 976 B1**
(45) Veröffentlichungstag und Bekanntmachung des Hinweises auf die Patenterteilung: **26.09.2012**
(21) Anmeldenummer: 09154238.1
(22) Anmeldetag: 03.03.2009
(51) Int. Cl.: A47J 31/44

(54) **Vorrichtung zum Herstellen von Milchschaum**
Device for producing milk foam
Dispositif de fabrication de mousse de lait

(43) Veröffentlichungstag der Anmeldung: 08.09.2010
(73) Patentinhaber: Delica AG, 4127 Birsfelden (CH)
(72) Erfinder: Brönimann, Markus, 2560 Nidau (CH); Lehner, Christoph, 4077 Elfingen (CH)
(74) Vertreter: Hepp Wenger Ryffel AG

(56) Entgegenhaltungen:
- EP-A- 1 707 090
- WO-A-2005/102126
- DE-A1- 4 445 436

## Beschreibung

Die Erfindung betrifft eine Vorrichtung zum Herstellen von Milchschaum gemäss dem Oberbegriff von Anspruch 1. Eine derartige Vorrichtung kann dazu verwendet werden, Milchschaum für Kaffeegetränke wie etwa Cappuccino oder Latte Macchiato herzustellen. Die Vorrichtung kann Teil einer Anordnung mit einer Kaffeemaschine sein. Selbstverständlich ist es aber auch denkbar, die Vorrichtung als Einzelmaschine auszugestalten.

Systeme zum Herstellen von Milchschaum sind seit längerer Zeit gebräuchlich. Eine gattungsmässig vergleichbare Vorrichtung ist aus der WO 2005/102126 A2 bekannt geworden. Darin ist eine Kaffeemaschine beschrieben, an die eine mobile Einheit mit einem Milchbehälter und einer Düse vom Venturi-Typ zum Aufschäumen von Milch andockbar ist. Die Düse weist eine Düseneintrittsöffnung für den Dampf, einen Lufteinlass, einen Milcheinlass sowie eine Düsenaustrittsöffnung auf. An die Düsenaustrittsöffnung ist ein Winkel-Rohrstück befestigt, das die Ausgabeöffnung vorgibt. Die für die Milchschaumerzeugung benötigte Luft liegt als Umgebungsluft vor und wird unter Ausnutzung des Saugeffekts in der Düse angesaugt. Nachteilig an dieser Vorrichtung ist beispielsweise, dass die Ansteuerung oder Regelung der Luftzufuhr relativ aufwendig ist. Dies hat zur Folge, dass der Milchschaum und damit die Qualität des Kaffee-Milchgetränks höheren Anforderungen oft nicht genügt. Beispielsweise hat sich in der Praxis gezeigt, dass der mit dieser Vorrichtung produzierte Milchschaum in Bezug auf die Temperatur relativ schwierig zu kontrollieren ist. Insgesamt zeichnet sich die Vorrichtung durch einen relativ komplizierten Aufbau aus. Dies betrifft insbesondere die Milchschäumer-Düse, die vielteilig ausgestaltet ist. Damit wäre die Düse nicht als Wegwerfartikel geeignet.

Die DE 44 45 436 beschreibt eine Aufschäumvorrichtung zum Aufschäumen von Milch zur Zubereitung von Cappuccino, mit einer Zuleitung für Dampf, einer Zuleitung für Luft und einer Zuleitung für Milch und mit einem Mischbereich, in dem die Zuleitungen zusammengeführt werden, wobei die Zuleitung für die Luft mit einer Druckluftquelle zum Einblasen der Luft verbunden ist und wobei das Einblasen der Luft steuerbar ist.

Die EP 1 707 090 beschreibt eine Vorrichtung zur Erzeugung von Milchschaum und/oder zum Erhitzen von Milch, die mit einem Mischelement versehen ist. Dieses weist zumindest einen mit einer Dampfzufuhrleitung verbindbaren Dampfeinlasskanal, einen mit einer Milchzufuhrleitung verbindbaren Milcheinlasskanal, einen mit einer Abgabeleitung verbindbaren Abgabekanal sowie einen Lufteinlasskanal auf.

Es ist daher eine Aufgabe der Erfindung, die Nachteile des Bekannten zu vermeiden und insbesondere eine Vorrichtung der eingangs genannten Art zu schaffen, mit der die Luftzufuhr für die Milchschaumerzeugung auf einfache Art und Weise variiert werden kann. Insbesondere soll die Vorrichtung eine vorteilhafte Ansteuerung oder Regelung der Luftzufuhr ermöglichen. Die Vorrichtung soll sich weiterhin durch einen einfachen Aufbau und verbesserte Hygiene auszeichnen.

Diese Aufgaben werden erfindungsgemäss mit einer Vorrichtung erreicht, die die Merkmale in Anspruch 1 aufweist. Die Vorrichtung zum Herstellen von Milchschaum sowie gegebenenfalls zum Erhitzen von Milch kann eine Dampfzufuhrleitung aufweisen, an die in Strömungsrichtung die mit einer Düseneintrittsöffnung versehene Düse anschliessen kann. Die Düse kann einen Düsenkanal aufweisen, dessen Kanalquerschnitt sich ausgehend von der Düseneintrittsöffnung in einen verengten Kanalabschnitt verjüngt. Der Kanalquerschnitt kann sich anschliessend in Richtung einer Düsenaustrittsöffnung aufweiten. Die Milch kann aus dem Milchbehälter unter Ausnutzung der durch die beschleunigte Strömung im verengten Kanalabschnitt erzeugten Saugwirkung in die Düse eingesaugt werden. Dadurch, dass der Lufteinlass sich nicht in der Düse befindet, sondern ausserhalb der Düse angeordnet ist, ergeben sich zahlreiche Vorteile. So kann beispielsweise die Düse selbst einfach ausgestaltet sein. Die örtliche Verschiebung des Lufteinlasses hat aber auch steuerungs- oder reglungstechnische Vorteile. Weiterhin kann sich die erfindungsgemässe Anordnung auch günstig auf die Hygiene auswirken, da nur wenige Teile oder Abschnitte der Vorrichtung mit Milch beaufschlagt werden.

Die Düse weist einen Milchzufuhrkanal auf, der etwa im Bereich der engsten Stelle im verengten Kanalabschnitt in den Düsenkanal mündet. Durch diese Anordnung lässt sich unter Ausnutzung des Saug-Effekts Milch besonders effizient in die Düse ansaugen.

In einer ersten Ausführungsform kann die Vorrichtung eine Luftpumpe aufweisen, die zum Einbringen von Luft in die Dampfzufuhrleitung über ein Luftzuleitungsmittel mit der Lufteintrittsöffnung verbunden oder verbindbar ist. Das Luftzuleitungsmittel kann eine Luftzufuhrleitung sein. Eine solche Leitung kann als Schlauch ausgestaltet sein. Als Luftzuleitungsmittel sind aber zum Beispiel auch Ventile vorstellbar. Durch dieses Anschliessen einer Luftpumpe an die Dampfzufuhrleitung ist die Luftzufuhr besonders einfach einstellbar. Die Vorrichtung kann selbstverständlich auch derart betrieben werden, dass Milch (ohne Erzeugen von Milchschaum) erhitzbar ist.

Bei der Luftpumpe kann es sich beispielsweise um eine Membran- oder Verdichterluftpumpe handeln.

Besonders vorteilhaft kann es sein, wenn die Vorrichtung Steuermittel aufweist, über die die Luftpumpe zum Vorgeben des Mischungsverhältnisses des Dampf-Luft-Gemisches in der Dampfzufuhrleitung ansteuerbar ist. Die Steuermittel können Mikroprozessoren enthalten. Die Luftzufuhr kann so einfach variiert werden, wodurch unterschiedliche Milch- oder Kaffee-Milch-Getränke wie Cappuccino, Latte Macchiato einfach und mit hoher Qualität hergestellt werden können. Die Luftpumpe kann mittels der Steuermittel aber auch derart ansteuerbar sein, dass für den "heisse Milch"-Betrieb die Luftpumpe nicht aktiviert wird oder die Luftpumpe nur in einem Teillastbetrieb läuft. Mit dieser Anordnung kann die Temperatur des Dampf-Luft-Stroms auf einfache und vorteilhafte Art und Weise eingestellt werden. Weiter stellt die Luftzufuhr mittels der beschriebenen angesteuerten Luftpupe sicher, dass ein ausreichend heisser Milchschaum oder heisse Milch produziert werden kann.

Weiter kann die Vorrichtung einen Wasserbehälter, eine daran angeschlossene Wasserpumpe und einen damit verbundenen Dampferzeuger aufweisen, über den Dampf in die Dampfzufuhrleitung einspeisbar ist. Besonders vorteilhaft kann es sein, wenn die Vorrichtung Steuermittel zum Variieren der Pumpleistung der Wasserpumpe aufweist.

In einer weiteren Ausführungsform kann es vorteilhaft sein, wenn die Düse als einstückiges, vorzugsweise in einem Spritzgussverfahren geschaffenes, Bauteil ausgebildet ist, das vorteilhaft aus Kunststoff besteht. Eine solche Düse lässt sich einfach und kostengünstig herstellen. Damit wäre die Düse als Wegwerfartikel geeignet. Dieses einstückige Bauteil kann die Düseneintrittsöffnung, die Düsenaustrittsöffnung und einen Milchzufuhrleitungsanschluss aufweisen. Der Milchzufuhrleitungsanschluss kann dabei als Milchansaugstutzen zum Anschliessen der Milchzufuhrleitung ausgestaltet sein, welcher einen mit dem Düsenkanal verbundenen Milchzufuhrkanal umgibt. Die Milchzufuhrleitung kann über eine Steck- oder Schnappverbindung am Milchansaugstutzen lösbar befestigt oder befestigbar sein.

Die Düsenaustrittsöffnung der Düse kann eine freiliegende Ausgabeöffnung zum Ausgeben des Milchschaums in eine Tasse. Zusätzliche Bauteile zum Vorgeben einer Ausgabeöffnung sind damit nicht nötig.

Der Düsenkanal kann eine Umlenkung aufweisen, so dass die Strömungsrichtung im Bereich der Düseneintrittsöffnung und die Strömungsrichtung im Bereich der Düsenaustrittsöffnung etwa rechtwinklig zueinander verlaufen. Vorteilhaft kann es sodann sein, wenn der Milchzufuhrkanal im Bereich der Umlenkung etwa rechtwinklig in den Düsenkanal mündet. Somit können die jeweils der Düseneintrittsöffnung und der Düsenaustrittsöffnung zugeordneten Kanalabschnitte und der Milchzufuhrkanal je im rechten Winkel ausgerichtet sein. Selbstverständlich wäre es aber auch vorstellbar, dass der Düsenkanal gerade verlaufen kann, so dass die Hauptströmungsrichtung zwischen der Düseneintrittsöffnung und im Bereich der Düsenaustrittsöffnung unverändert bleibt.

Die Handhabung lässt sich weiter vereinfachen, wenn die Düse über einen Bajonettverschluss an der Dampfzufuhrleitung angeschlossen oder anschliessbar ist. Selbstverständlich könnte die Düse aber auch auf andere Weise lösbar mit der Dampfzufuhrleitung verbunden werden.

Die Düse kann schwenkbar an einem Deckelteil des Milchbehälters vorzugsweise lösbar befestigt oder befestigbar sein. In einer Ausgangsstellung kann die Düse platzsparend am Milchbehälter befestigt sein. Die Düse kann soweit in eine Ausgabestellung ausgeschwenkt werden, dass der Milchschaum direkt in eine Tasse ausgegeben werden kann.

Ein weiterer Aspekt der Erfindung betrifft eine Anordnung mit der vorgängig beschriebenen Vorrichtung und einer Kaffeemaschine zum Brühen von Kaffee. Derartige Kaffeemaschinen können zum Beispiel Kaffee-Vollautomaten sein, bei denen Kaffeebohnen nach Knopfdruck zuerst automatisch gemahlen und dann gebrüht werden. Selbstverständlich kann die Kaffeemaschine auch eine Maschine sein, die mit Kapseln, Pouches oder andere Portionenverpackungen arbeitet.

Weitere Einzelmerkmale und Vorteile der Erfindung ergeben sich aus der nachstehenden Beschreibung eines Ausführungsbeispiels und aus den Zeichnungen. Es zeigen:
- Figur 1: eine Anordnung mit einer Kaffeemaschine und einer Vorrichtung zum Herstellen von Milchschaum,
- Figur 2: eine stark vereinfachte schematische Darstellung ei- ner erfindungsgemässen Vorrichtung zum Herstellen von Milchschaum,
- Figur 3: eine perspektivische Explosionsdarstellung der Vor- richtung zum Herstellen von Milchschaum für die An- ordnung gemäss Figur 1,
- Figur 4: eine Seitenansicht der Vorrichtung gemäss Figur 3,
- Figur 5: eine weitere Seitenansicht mit einem Teilschnitt der Vorrichtung mit einer Düse in einer Ausgangsstellung,
- Figur 6: die Vorrichtung mit einer ausgeschwenkten Düse,
- Figur 7: eine Schnittdarstellung der Vorrichtung entlang der Schnittlinie A-A gemäss Figur 5,
- Figur 8: einen Längsschnitt durch ein Rohrstück der Dampfzu- fuhrleitung und eine daran angeschlossene Luftpumpe,
- Figur 9: eine perspektivische Vorderansicht des Rohrstücks mit der Luftpumpe gemäss Figur 8, und
- Figur 10: eine schematische Darstellung einer weiteren Vorrich- tung zum Herstellen von Milchschaum.

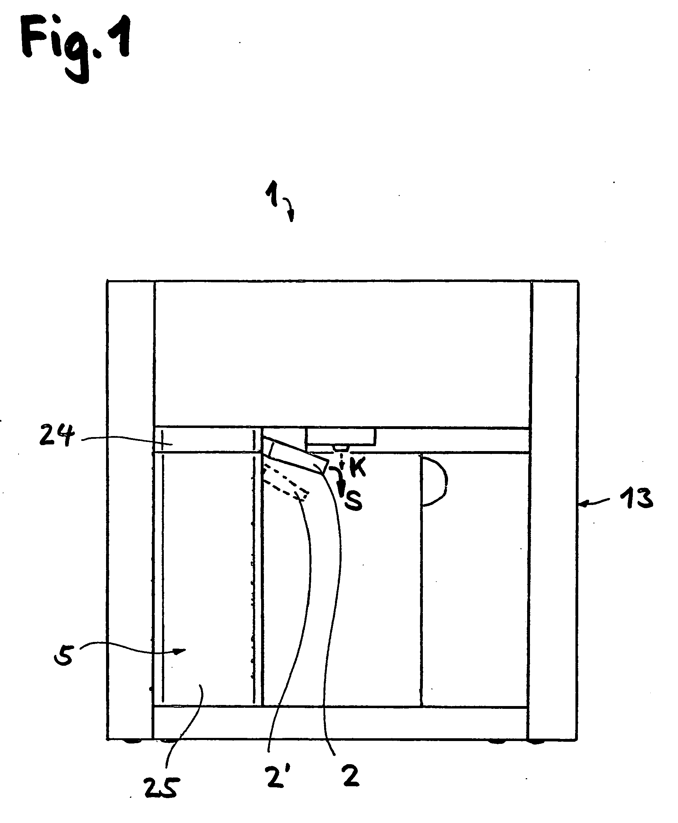

Figur 1 zeigt eine Gesamtansicht einer mit 1 bezeichneten Anordnung mit einer Kaffeemaschine 13 zum Brühen von Kaffee K und einer daran angedockten Vorrichtung 24 zum Herstellen von Milchschaum S. Bei der Kaffeemaschine kann es sich um einen konventionellen Kaffeevollautomaten mit Kaffeebohnen oder beispielhaft auch um eine sogenannte Kapselmaschine handeln. Der Grundaufbau derartiger Kaffeemaschinen ist dem Fachmann bekannt und geläufig, weshalb auf einen näheren Beschrieb der Kaffeemaschine verzichtet werden kann. Die Kaffeemaschine 13 ist mit hier nicht gezeigten, jedoch nachfolgend im Detail beschriebenen Mitteln zum Erzeugen von Dampf und zum Zuführen von Luft zum Emulgieren von Milch, Dampf und Luft für die Milchschaumherstellung ausgestattet.

Wie Figur 1 zeigt, besteht die Vorrichtung 13 aus einem Milchbehälter 5, in dem eine Düse 2 integriert ist. Der Milchbehälter ist mit einem Deckelteil 24 verschlossen. Innenseitig am Deckelteil 24 ist schwenkbar die Düse 2 befestigt. Die Düse befindet sich in Figur 1 in einer ausgeschwenkten Stellung (Ausgabestellung), in der Milchschaum S in eine (nicht dargestellte) Tasse abgegeben werden kann. Mit 2' ist die Düse in einer anderen Ausgabestellung angedeutet.

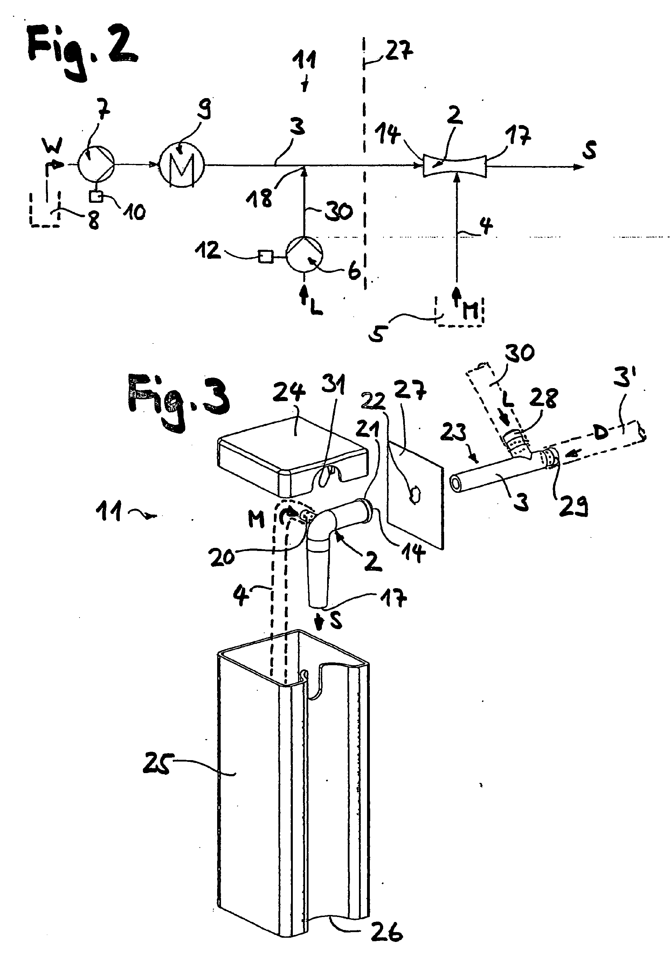

Aus der schematischen Darstellung gemäss Figur 2 ist der prinzipielle Aufbau und die Funktionsweise der Milchschäumer-Vorrichtung 11 gezeigt. In der Vorrichtung 11 wird Dampf, Luft und Milch in einer Düse 2 miteinander vermischt und emulgiert (Strömungsrichtungen sind mit Pfeilen angedeutet). Der so erzeugte, mit S angedeutete Milchschaum gelangt schliesslich in eine (nicht dargestellte) Tasse oder einen anderen Aufnahmebehälter. Zum Herstellen von Dampf wird Wasser W einem Wasserbehälter 8 mit Hilfe einer Wasserpumpe 7 entnommen. Das Wasser wird anschliessend durch einen Dampferhitzer 9 geführt. Der Dampf wird dann über eine Dampfzufuhrleitung 3 zu einer Düse 2 geführt. Die Düse 2 weist einen Düsenkanal mit einem konvergentdivergenten Kanalquerschnitt auf. Die Düseneintrittsöffnung ist mit 14, die Düsenaustrittsöffnung mit 17 bezeichnet. Unter Ausnutzung der durch die beschleunigte Strömung in einem verengten Kanalabschnitt der Düse 2 erzeugten Saugwirkung wird Milch M über eine Milchzufuhrleitung 4 aus einem Milchbehälter 5 in die Düse 2 angesaugt.

Zur Schaumerzeugung muss dem Dampf Luft zugemischt werden. Dazu wird Luft L, vorzugsweise in Form von Umgebungsluft mit Hilfe einer Luftpumpe 6 über eine Luftzufuhrleitung 30 unter Druck von 10 bis 100 kPa der Dampfströmung zugeführt. Die Lufteintrittsöffnung 18 befindet sich in Bezug auf die Strömungsrichtung vor der Düseneintrittsöffnung 14 vor der Düse. Mit einer gestrichelten Linie 27 ist eine Gehäusewand einer Kaffeemaschine angedeutet. Die Linie 27 kann - für bestimmte Ausführungsvarianten (siehe nachfolgende Figur 3-7) - als Trennlinie aufgefasst werden, die die Vorrichtung 11 in zwei Teile aufteilt. Der eine Teil, d.h. einerseits die Komponenten 7,8,9 für die Dampferzeugung und andererseits die Komponente 6 für die erzwungene Luftzuführung, sind der Kaffeemaschine zugeordnet. Der restliche Teil der Vorrichtung kann von der Kaffeemaschine abgekoppelt werden. Zum letztgenannten mobilen Teil gehören - wie Figur 2 zeigt - ersichtlicherweise die Düse 2 sowie der Milchbehälter 5.

In Abhängigkeit vom gewünschten Getränk (z.B. für Cappuccino oder Latte Macchiato) können unterschiedliche Luftvolumenströme in die Dampfleitung eingespeist werden. Die Steuerung des Luftvolumenstroms erfolgt mit Hilfe eines Steuermittels 12, mit dem die Pumpleistung verändert werden kann. Selbstverständlich kann die Vorrichtung 11 aber auch so betrieben werden, dass keine Luft eingespeist wird. Die Vorrichtung kann also auch zur Herstellung von heisser Milch verwendet werden. In der Luftzufuhrleitung 30 kann ein Regulierventil (nicht dargestellt) angeordnet sein. Anstatt eines Regulierventils wären alternativ auch Rückschlagventile oder betätigte Sperrventile denkbar. Die Dampfzufuhr wird vorzugsweise mit Hilfe eines Steuermittels 10 gesteuert, mit dem die Pumpleistung der Wasserpumpe 7 variiert werden kann. Die beiden Steuermittel 10 und 11 können selbstverständlich Bestandteil einer gemeinsamen EDV-Einrichtung sein.

Konstruktive Details einer möglichen Ausgestaltung der Vorrichtung 11 sind aus Figur 3 entnehmbar. Die Düse 2 wird durch ein einstückiges Bauteil gebildet. Ein derartiges Bauteil aus Kunststoff lässt sich einfach in einem Spritzgussverfahren herstellen. Die Düse 2 weist neben der Düseneintrittsöffnung 14 und der Düsenaustrittsöffnung 17 einen Milchzufuhrleitungsanschluss in Form eines Milchansaugstutzens 20 auf. Die jeweils der Düseneintrittsöffnung 14, der Düsenaustrittsöffnung 11 zugeordneten Düsensegmente und der Milchansaugstutzen 20 sind je im rechten Winkel zueinander ausgerichtet. Die mit gestrichelten Linien angedeutete Milchzufuhrleitung 4 kann ein flexibler Schlauch sein, der auf den Milchansaugstutzen 20 aufgesteckt werden kann.

Die Düse 2 kann in den Milchbehälter eingesetzt werden. Hierzu sind am Deckelteil 24 des Milchbehälters Rastmittel 31 in Form federnder Rastarme vorgesehen, mit deren Hilfe die Düse rastend aufnehmbar ist. Der Deckelteil 24 kann aus Kunststoff bestehen und ein vorzugsweise einstückiges Spritzgussteil sein. Der Milchbehälter enthält weiterhin einen becher- oder wannenförmigen Grundkörper 25, auf den der Deckelteil 24 (zusammen mit der Düse 2) aufgesetzt werden kann. Milchbehälter und Düse bilden eine mobile Einheit, die von der restlichen Vorrichtung abgekoppelt und wieder angedockt werden kann. Ein mit Frischmilch befüllter Milchbehälter kann in einem Kühlschrank aufbewahrt werden. Für die mobile Milchbehälter-Düse-Einheit sind im Wesentlichen nur vier Bauteile (inklusive Milchzufuhrleitung 4) erforderlich, die alle aus Kunststoff bestehen können. Die Verwendung derart weniger einfacher Bauteile wirkt sich günstig auf Handhabung und Kosten aus.

Figur 3 zeigt weiterhin, dass der Lufteinlass sich ausserhalb der Düse 2 befindet. Der Lufteinlass ist durch einen Lufteinlassstutzen 28 vorgegeben, über den die mit gestrichelten Linien angedeutete Luftzufuhrleitung 30 an die Dampfzufuhrleitung 3 anschliessbar ist. Die Luft L wird somit über eine Lufteintrittsöffnung dem Dampfstrom D zugegeben. An die Leitung 30 ist die (hier nicht dargestellte) Luftpumpe angeschlossen. Der Dampf D wird wie vorgängig beschrieben mit Hilfe eines (hier ebenfalls nicht dargestellten) Dampferzeugers hergestellt. Im Bereich der maschinenseitigen Schnittstelle befindet sich innerhalb des Gehäuses 27 ein Rohrstück 23, das einen Teil der Dampfzufuhrleitung 3 bildet. Das Teil 23 ist als T-Rohrstück ausgestaltet und weist den erwähnten Lufteinlassstutzen 28 und einen Dampfeinlassstutzen 29 auf, über die jeweils die mit gestrichelten Linien angedeuteten Leitungen für die Luft L und den Dampf D anschliessbar sind. Die Luftzufuhrleitung 30 kann als Kunststoffschlauch ausgestaltet sein. Der mit 3' bezeichnete Schlauch kann ein temperaturbeständiger Schlauch beispielsweise ein Silikon armierter Schlauch oder auch aus Teflon® sein.

Zum Andocken der mobilen Einheit enthaltend Milchbehälter und Düse 2 muss die Düse 2 mit dem Ausgang der Dampfzufuhrleitung 3 verbunden werden. Die lösbare Verbindung kann - wie beispielhaft Figur 3 zeigt - durch einen Bajonettverschluss erfolgen. Hierzu sind düseneingangsseitig entsprechende Verbindungsmittel 21 angeordnet. An der Gehäusewand 27 ist eine zum Verbindungsmittel 21 komplementäre Aussparung 22 für den Bajonettverschluss vorgesehen. Denkbar sind aber auch andere lösbare Befestigungsmittel.

Wie Figur 3 sodann zeigt, ist der Milchbehälter etwa quaderförmig ausgestaltet. Sowohl Deckelteil 24 als auch der Grundkörper 25 verfügen über einen im Wesentlichen etwa rechtwinkligen Grundriss. An einer Seitenwand des Grundkörpers 25 befindet sich eine Einbuchtung 26 zur Aufnahme der Düse 2 in einer Ausgangsstellung. Am deckelseitigen Ende dieser Seitenwand ist eine etwa U-förmige Aussparung erkennbar, in welche der Milchansaugstutzen 20 einführbar ist.

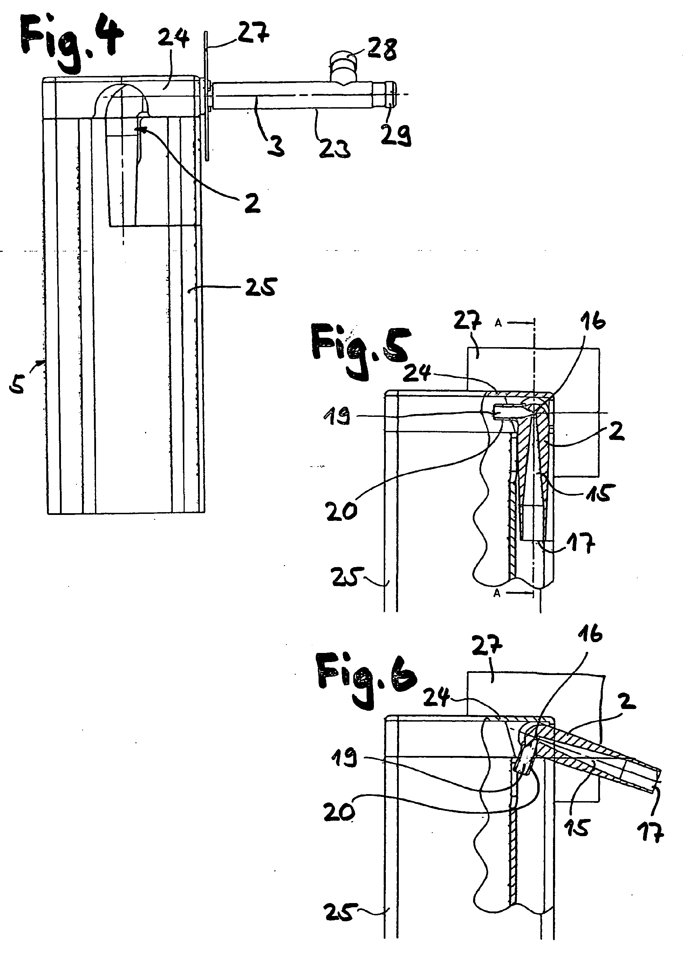

In Figur 4 ist die mobile Einheit mit dem Milchbehälter 5 und der Düse an die Kaffeemaschine angedockt. Wie aus Figur 4 hervorgeht, bildet der zusammengesetzte Milchbehälter 5 mit dem Grundkörper 25 und dem Deckelteil 24 eine kompakte Einheit.

Wie aus den Figuren 5 und 6 hervorgeht, kann die Düse zwischen einer Ausgangsstellung und einer Abgabestellung geschwenkt werden. In Figur 5 befindet sich die Düse 2 in einer Ausgangsstellung, in der sich das der Düsenaustrittsöffnung 17 zugeordnete Düsensegment mit dem entsprechenden Kanalabschnitt entlang der Behälterwand des Grundkörpers 25 des Milchbehälters erstreckt. In Figur 6 ist die Düse 2 ausgeschwenkt. In dieser Stellung kann Milchschaum (oder heisse Milch) direkt in eine (nicht dargestellte) Tasse abgegeben werden. Der Anwender hat die Möglichkeit, den Schwenkwinkel an die Tassengrösse anzupassen. Durch das Verschwenken wird aber auch gleichzeitig der vorgängig beschriebene Bajonettverschluss in eine Schliessstellung gebracht. Die Anordnung verfügt vorzugsweise über (nicht dargestellte) Schaltmittel, die mit den Steuermitteln für die Wasserpumpe und die Luftpumpe elektrisch oder elektronisch verbunden sind. Die Schaltmittel dienen zur Anwesenheitskontrolle und zeigen an, ob die mobile Einheit korrekt angekoppelt ist. Dadurch kann ein unbeabsichtigtes Entweichen von Dampf vermieden werden, wodurch ein sicherer Betrieb der Anordnung sichergestellt ist.

In Figuren 5 und 6 ist weiterhin erkennbar, dass der Milchansaugstutzen 20 einen Milchzufuhrkanal 19 umgibt, der mit dem Düsenkanal 15 im Bereich etwa der engsten Stelle verbunden ist.

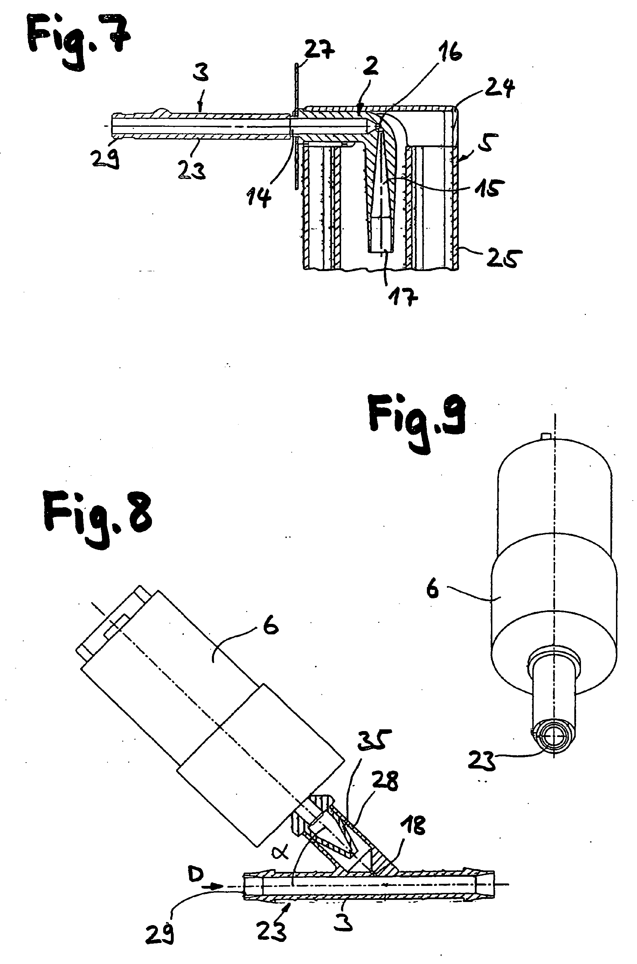

Aus der Schnittdarstellung gemäss Figur 7 ist insbesondere die Ausgestaltung des Düsenkanals 15 erkennbar. Der Düsenkanal 15 weist zunächst einen von der Düseneintrittsöffnung 14 ausgehenden, etwa zylindrischen Abschnitt auf, an den ein sich verjüngender, etwa konischer Abschnitt anschliesst. An den sich verjüngenden Abschnitt schliesst der mit 16 bezeichnete Kanalabschnitt an, der die engste Stelle des Düsenkanals vorgibt. Am so verengten Düsenkanal schliesst dann wieder ein sich aufweitender, etwa konischer Kanalabschnitt an. Im Bereich der Düsenaustrittsöffnung 17 weist der Düsenkanal schliesslich einen etwa zylindrischen Kanalabschnitt auf.

Die Figuren 8 und 9 zeigen einen gegenüber dem Ausführungsbeispiel gemäss Figur 3 modifizierten Luftanschluss für die Milchschäumer-Vorrichtung. Figur 8 zeigt einen Längsschnitt durch ein Rohrstück 23, das Teil der Dampfleitung 3 ist. Im Gegensatz zum Ausführungsbeispiel gemäss Figur 3 ist der Lufteinlassstutzen nicht rechtwinklig zur Dampfleitung ausgerichtet, sondern die Luft wird über einen schrägen Lufteinlassstutzen 28 dem Dampfstrom D zugegeben. In Figur 8 ist ein entsprechender Neigungswinkel mit α angedeutet, der hier beispielhaft etwa 45° beträgt. Selbstverständlich wären aber auch andere Neigungswinkel denkbar (z.B. 30° < α < 60°). Weiterhin ist ein Membranventil 35 erkennbar, das in den Lufteinlassstutzen 28 eingesteckt ist. An dieses Ventil 35 schliesst unmittelbar die Luftpumpe 6 an. Eine eigentliche Luftzufuhrleitung in Form eines separaten Schlauchstücks (vgl. Fig. 3) ist bei der Variante gemäss Figur 8 nicht vorgesehen. Sodann zeigt Figur 8, dass der die Lufteintrittsöffnung 18 vorgebende Luftzufuhrkanal im Mündungsbereich in den Dampfstrom im Vergleich zum Dampfkanalquerschnitt einen erheblich geringeren Kanalquerschnitt aufweist. Der Durchmesser des Luftzufuhrkanals im Mündungsbereich in den Dampfstrom kann zwischen 0.2 und 2mm (z.B. ca. 1mm) liegen, während der der Durchmesser des Dampfkanals des Rohrstücks 23 z.B. 4mm beträgt.

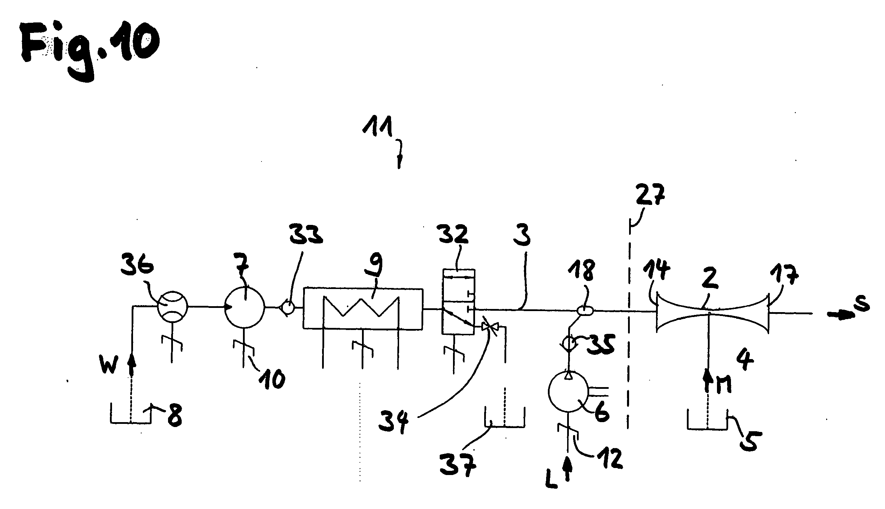

In Figur 10 ist ein gegenüber dem Ausführungsbeispiel gemäss Figur 2 detaillierteres Flussdiagramm für eine Milchschäumer-Vorrichtung 11 in einer leicht modifizierten Form dargestellt. Aus Figur 10 ist etwa erkennbar, dass die Vorrichtung 11 einen Durchflussmesser 36 aufweist, der steuer- und regeltechnisch mit der Wasserpumpe 7 in Wirkverbindung steht. Mit 33 ist ein Rückschlagventil bezeichnet. Das Bezugszeichen 32 steht für ein 3/2-Wege-Ventil. An einem Ausgang des Ventils ist ein Ventil 34 angeschlossen, über das im Fall eines Überdrucks Dampf - anstatt in die Dampfleitung 3 - abgelassen werden kann. Überschüssiges Restwasser kann von einem Behälter 37 aufgefangen werden. Zum Schutz der Luftpumpe ist als Rückschlagventil ein Membranventil 35 vorgesehen.

## Patentansprüche

1. Vorrichtung (11) zum Herstellen von Milchschaum mit einer Dampfzufuhrleitung (3), mit einer zur Erzielung einer Saugwirkung sich verengenden Düse (2), mit einer Milchzufuhrleitung (4), die derart mit der Düse verbunden ist, dass Milch aus einem Milchbehälter (5) unter Saugwirkung in die Düse (2) ansaugbar ist, und mit einem Lufteinlass zum Zumischen von Luft zum Erzeugen des Milchschaums, wobei der Lufteinlass eine Lufteintrittssöffnung (18) in der Dampfzufuhrleitung (3) ist, welche sich in Bezug auf die Strömungsrichtung vor einer Düseneintrittsöffnung (14) der Düse (2) befindet, **dadurch gekennzeichnet, dass** die Düse (2) einen Milchzufuhrkanal (19) aufweist, der etwa im Bereich der engsten Stelle im verengten Kanalabschnitt (16) in einen Düsenkanal (15) der Düse (2) mündet.

2. Vorrichtung nach Anspruch 1, **dadurch gekennzeichnet, dass** sie eine Luftpumpe (6) aufweist, die zum Einbringen von Luft in die Dampfzufuhrleitung (3) über ein Luftzuleitungsmittel (4, 35) mit der Lufteintrittsöffnung (18) verbunden oder verbindbar ist.

3. Vorrichtung nach Anspruch 2, **dadurch gekennzeichnet, dass** sie Steuermittel (10) aufweist, über die die Luftpumpe (6) zum Vorgeben des Mischungsverhältnisses des Dampf-LuftGemisches in der Dampfzufuhrleitung (3) ansteuerbar ist.

4. Vorrichtung nach einem der Ansprüche 1 bis 3, **dadurch gekennzeichnet, dass** sie einen Wasserbehälter (8), eine daran angeschlossene Wasserpumpe (7) und einen damit verbundenen Dampferzeuger (9) aufweist, über den Dampf in die Dampfzufuhrleitung (3) einspeisbar ist.

5. Vorrichtung nach Anspruch 4, **dadurch gekennzeichnet, dass** sie Steuermittel (12) zum Variieren der Pumpleistung der Wasserpumpe (7) aufweist.

6. Vorrichtung nach einem der Ansprüche 1 bis 5, **dadurch gekennzeichnet, dass** die Düse (2) als einstückiges, vorzugsweise in einem Spritzgussverfahren geschaffenes Bauteil enthaltend
- eine Düseneintrittsöffnung (14),
- eine Düsenaustrittsöffnung (17), und
- einen Milchzufuhrleitungsanschluss, insbesondere in Form eines einen Milchzufuhrkanal (19) umgebenden Milchansaugstutzens (20) zum Anschliessen der Milchzufuhrleitung (4),
ausgebildet ist.

7. Vorrichtung nach einem der Ansprüche 1 bis 6, **dadurch gekennzeichnet, dass** eine Düsenaustrittsöffnung (17) der Düse (2) eine Ausgabeöffnung zum Ausgeben des Milchschaums bildet, welche frei liegt.

8. Vorrichtung nach einem der Ansprüche 1 bis 7, **dadurch gekennzeichnet, dass** der Düsenkanal (15) eine Umlenkung aufweist, so dass die Strömungsrichtung im Bereich der Düseneintrittsöffnung (14) und die Strömungsrichtung im Bereich der Düsenaustrittsöffnung (17) etwa rechtwinklig zueinander verlaufen.

9. Vorrichtung nach Anspruch 8, **dadurch gekennzeichnet, dass** der Milchzufuhrkanal (19) im Bereich der Umlenkung etwa rechtwinklig in den Düsenkanal (15) einmündet.

10. Vorrichtung nach einem der Ansprüche 1 bis 9, **dadurch gekennzeichnet, dass** die Düse (2) über einen Bajonettverschluss (21,22) an der Dampfzufuhrleitung (3) angeschlossen oder anschliessbar ist.

11. Vorrichtung nach einem der Ansprüche 1 bis 9, **dadurch gekennzeichnet, dass** die Düse (2) schwenkbar an einem Deckelteil (24) eines Milchbehälters (5) vorzugsweise lösbar befestigt oder vorzugsweise lösbar befestigbar ist.

12. Vorrichtung nach Anspruch 11, **dadurch gekennzeichnet, dass** der Milchbehälter (5) eine Einbuchtung (26) zur Aufnahme der Düse (2) in einer Ausgangsstellung aufweist.

13. Vorrichtung nach einem der Ansprüche 1 bis 12 mit einem Milchbehälter (5), **dadurch gekennzeichnet, dass** der Milchbehälter (5) und die Düse (2) eine mobile Einheit bilden, die von der restlichen Vorrichtung abkoppelbar und wieder andockbar ist.

14. Vorrichtung nach einem der Ansprüche 1 bis 13 mit einem Gehäuse (27) für die Komponenten (7, 8, 9) der Dampferzeugung und für eine Luftpumpe (6) für die erzwungene Luftzuführung in die Dampfzufuhrleitung (3) an der Lufteintrittsöffnung (18), **dadurch gekennzeichnet, dass** die Lufteintrittsöffnung (18) innerhalb des Gehäuses (27) angeordnet ist und dass die Düse (2) mit der Milchzuführleitung ausserhalb des Gehäuses und von diesem lösbar angeordnet ist.

15. Vorrichtung nach einem der Ansprüche 1 bis 14, **dadurch gekennzeichnet, dass** der die Lufteintrittsöffnung (18) vorgeblende Luftzufuhrkanal im Mündungsbereich der Dampfzufuhrleitung (3) einen geringeren Querschnitt als die Dampfzufuhrleitung und vorzugsweise einen Durchmesser zwischen 0.2 mm und 2 mm aufweist.

16. Anordnung (1) mit einer Vorrichtung (11) nach einem der Ansprüche 1 bis 12 und einer Kaffeemaschine (13) zum Brühen von Kaffee.

## Claims

1. Device (11) for producing milk foam, having a steam supply line (3), having a nozzle (2) which is constricted to produce a suction effect, having a milk supply line (4) which is connected to the nozzle in such a way that milk can be sucked from a milk container (5) into the nozzle (2) under a suction effect, and having an air inlet for mixing in air to produce the milk foam, wherein the air inlet is an air inlet opening (18) in the steam supply line (3) which, with reference to the flow direction, is situated upstream of a nozzle inlet opening (14) of the nozzle (2), **characterized in that** the nozzle (2) has a milk supply duct (19) which opens into a nozzle duct (15) of the nozzle (2) approximately in the region of the narrowest point in the constricted duct portion (16).

2. Device according to Claim 1, **characterized in that** it comprises an air pump (6) which, in order to introduce air into the steam supply line (3), is connected or can be connected to the air inlet opening (18) via an air delivery means (4, 35).

3. Device according to Claim 2, **characterized in that** it comprises control means (10) via which the air pump (6) can be controlled to predetermine the mixing ratio of the steam-air mixture in the steam supply line (3).

4. Device according to one of Claims 1 to 3, **characterized in that** it comprises a water container (8), a water pump (7) connected thereto and a steam generator (9) connected thereto and via which steam can be fed into the steam supply line (3).

5. Device according to Claim 4, **characterized in that** it comprises control means (12) for varying the pumping capacity of the water pump (7).

6. Device according to one of Claims 1 to 5, **characterized in that** the nozzle (2) is designed as an integral component preferably created by an injection moulding process, comprising
- a nozzle inlet opening (14),
- a nozzle outlet opening (17), and
- a milk supply line connection, in particular in the form of a milk suction stub (20) which surrounds a milk supply duct (19) and is intended for connecting the milk supply line (4).

7. Device according to one of Claims 1 to 6, **characterized in that** a nozzle outlet opening (17) of the nozzle (2) forms a dispensing opening for dispensing the milk foam, which dispensing opening lies free.

8. Device according to one of Claims 1 to 7, **characterized in that** the nozzle duct (15) comprises a deflection such that the flow direction in the region of the nozzle inlet opening (14) and the flow direction in the region of the nozzle outlet opening (17) extend approximately at a right angle to one another.

9. Device according to Claim 8, **characterized in that** the milk supply duct (19) opens approximately at a right angle into the nozzle duct (15) in the region of the deflection.

10. Device according to one of Claims 1 to 9, **characterized in that** the nozzle (2) is connected or can be connected to the steam supply line (3) via a bayonet fastener (21, 22).

11. Device according to one of Claims 1 to 9, **characterized in that** the nozzle (2) is preferably releasably fastened or can preferably be releasably fastened in a pivotable manner on a cover part (24) of a milk container (5).

12. Device according to Claim 11, **characterized in that** the milk container (5) comprises an indentation (26) for accommodating the nozzle (2) in an initial position.

13. Device according to one of Claims 1 to 12 having a milk container (5), **characterized in that** the milk container (5) and the nozzle (2) form a mobile unit hich can be uncoupled from and redocked with the remainder of the device.

14. Device according to one of Claims 1 to 13 having a housing (27) for the components (7, 8, 9) of the steam generation and for an air pump (6) for the forced air supply into the steam supply line (3) at the air inlet opening (18), **characterized in that** the air inlet opening (18) is arranged inside the housing (27) and **in that** the nozzle (2) with the milk supply line is arranged outside the housing and such that it can be released therefrom.

15. Device according to one of Claims 1 to 14, **characterized in that**, in the mouth region of the steam supply line (3), the air supply duct predetermining the air inlet opening (18) has a smaller cross section than the steam supply line and preferably has a diameter between 0.2 mm and 2 mm.

16. Arrangement (1) comprising a device (11) according to one of Claims 1 to 12 and a coffee machine (13) for brewing coffee.

## Revendications

1. Dispositif (11) de fabrication de mousse de lait comprenant une conduite d'alimentation de vapeur (3), une buse (2) se rétrécissant pour produire un effet d'aspiration, une conduite d'alimentation de lait (4) qui est reliée à la buse de telle sorte que du lait puisse être aspiré depuis un réservoir de lait (5) par effet d'aspiration dans la buse (2), et une entrée d'air pour l'ajout d'air pour produire la mousse de lait, l'entrée d'air étant une ouverture d'entrée d'air (18) dans la conduite d'alimentation de vapeur (3) qui se trouve, par rapport à la direction d'écoulement, avant une ouverture d'entrée de buse (14) de la buse (2), **caractérisé en ce que** la buse (2) présente un canal d'alimentation de lait (19) qui débouche approximativement dans la région du point le plus étroit dans la portion de canal rétrécie (16) dans un canal de buse (15) de la buse (2).

2. Dispositif selon la revendication 1, **caractérisé en ce qu'**il présente une pompe à air (6) qui est connectée ou qui peut être connectée à l'ouverture d'entrée d'air (18) pour l'introduction d'air dans la conduite d'alimentation de vapeur (3) par le biais d'un moyen de conduite d'amenée d'air (4, 35).

3. Dispositif selon la revendication 2, **caractérisé en ce qu'**il présente un moyen de commande (10) par le biais duquel la pompe à air (6) peut être commandée pour prédéfinir le rapport de mélange du mélange vapeur-air dans la conduite d'alimentation de vapeur (3).

4. Dispositif selon l'une quelconque des revendications 1 à 3, **caractérisé en ce qu'**il présente un réservoir d'eau (8), une pompe à eau (7) raccordée à celui-ci, et un générateur de vapeur (9) connecté à celle-ci, par le biais duquel de la vapeur peut être injectée dans la conduite d'alimentation de vapeur (3).

5. Dispositif selon la revendication 4, **caractérisé en ce qu'**il présente des moyens de commande (12) pour faire varier la puissance de pompe de la pompe à eau (7).

6. Dispositif selon l'une quelconque des revendications 1 à 5, **caractérisé en ce que** la buse (2) est réalisée sous forme de composant d'une seule pièce, de préférence fabriqué dans un procédé de moulage par injection, contenant
- une ouverture d'entrée de buse (14),
- une ouverture de sortie de buse (17), et
- un raccord de conduite d'alimentation de lait, en particulier sous forme de tubulure d'aspiration de lait (20) entourant le canal d'alimentation de lait (19) pour le raccordement à la conduite d'alimentation de lait (4) .

7. Dispositif selon l'une quelconque des revendications 1 à 6, **caractérisé en ce qu'**une ouverture de sortie de buse (17) de la buse (2) forme une ouverture de décharge pour décharger la mousse de lait, laquelle ouverture est exposée à l'air libre.

8. Dispositif selon l'une quelconque des revendications 1 à 7, **caractérisé en ce que** le canal de buse (15) présente une déviation de telle sorte que le sens d'écoulement dans la région de l'ouverture d'entrée de buse (14) et le sens d'écoulement dans la région de l'ouverture de sortie de buse (17) s'étendent approximativement à angle droit l'un par rapport à l'autre.

9. Dispositif selon la revendication 8, **caractérisé en ce que** le canal d'alimentation de lait (19) débouche dans la région de la déviation approximativement à angle droit dans le canal de buse (15).

10. Dispositif selon l'une quelconque des revendications 1 à 9, **caractérisé en ce que** la buse (2) est raccordée ou peut être raccordée à la conduite d'alimentation de vapeur (3) par le biais d'une fermeture à baïonnette (21, 22).

11. Dispositif selon l'une quelconque des revendications 1 à 9, **caractérisé en ce que** la buse (2) est fixée de préférence de manière amovible ou peut être fixée de préférence de manière amovible, de manière pivotante, à une partie de couvercle (24) d'un réservoir de lait (5).

12. Dispositif selon la revendication 11, **caractérisé en ce que** le réservoir de lait (5) présente un renfoncement (26) pour recevoir la buse (2) dans une position de sortie.

13. Dispositif selon l'une quelconque des revendications 1 à 12, comprenant un réservoir de lait (5), **caractérisé en ce que** le réservoir de lait (5) et la buse (2) forment une unité mobile, qui peut être désaccouplée du reste du dispositif et à nouveau arrimée à celui-ci.

14. Dispositif selon l'une quelconque des revendications 1 à 13, comprenant un boîtier (27) pour les composants (7, 8, 9) de génération de vapeur et pour une pompe à air (6) pour l'alimentation d'air forcée dans la conduite d'alimentation de vapeur (3) au niveau de l'ouverture d'entrée d'air (18), **caractérisé en ce que** l'ouverture d'entrée d'air (18) est disposée à l'intérieur du boîtier (27) et **en ce que** la buse (2) est disposée avec la conduite d'alimentation de lait à l'extérieur du boîtier et de manière détachable de celui-ci.

15. Dispositif selon l'une quelconque des revendications 1 à 14, **caractérisé en ce que** le canal d'alimentation d'air prédéfinissant l'ouverture d'entrée d'air (18) présente, dans la région d'embouchure de la conduite d'alimentation de vapeur (3), une plus petite section transversale que la conduite d'alimentation de vapeur et de préférence un diamètre compris entre 0,2 mm et 2 mm.

16. Agencement (1) comprenant un dispositif (11) selon l'une quelconque des revendications 1 à 12 et une machine à café (13) pour la préparation de café.
